Europäisches Patentamt

(19) European Patent Office

Office européen des brevets

(11) Publication number: **0 000 105**
B1

(12) **EUROPEAN PATENT SPECIFICATION**

(45) Date of publication of patent specification: **11.11.81**

(51) Int. Cl.³: **B 65 G  39/09,** B 65 G  39/20, F 16 C  13/02

(21) Application number: **78300039.1**

(22) Date of filing: **13.06.78**

(54) Roller assembly primarily for a chain conveyor and a chain conveyor including such a roller assembly.

(30) Priority: **13.06.77 US  806028**

(43) Date of publication of application:
**20.12.78 Bulletin 78/1**

(45) Publication of the grant of the European patent:
**11.11.81 Bulletin 81/45**

(84) Designated Contracting States:
**DE FR GB**

(56) References cited:
**FR - A - 1 227 575**
**US - A - 3 490 773**

(73) Proprietor: **REXNORD INC.**
**P.O. Box 2022**
**Milwaukee, Wisconsin 53201 (US)**

(72) Inventor: **Anderson, William, B.**
**N55 W35909 Lisbon Road**
**Oconomowoc, Wisconsin 53066 (US)**
Inventor: **Yulga, Julius J.**
**8815 West Dogwood Street**
**Milwaukee, Wisconsin 53224 (US)**

(74) Representative: **Barnard, Eric Edward et al,**
**BROOKES & MARTIN High Holborn House  52/54**
**High Holborn**
**London WC1V 6SE (GB)**

Courier Press, Leamington Spa, England.

Roller assembly primarily for a chain conveyor and a chain conveyor including such a roller assembly

The present invention relates generally to the art of chain conveyors of the kind in which conveyor flights are moved by one or more chain strands, the chain strands being supported for rolling movement on rails by a series of roller assemblies.

A wide variety of chains and conveyor flights are known in the art because of the extremely wide range of materials which may be conveniently conveyed in this manner. One type of conveyor widely used to convey bulk materials is commonly known in the art as an apron conveyor or a pan conveyor. This type of conveyor utilises a series of open-ended overlapping pans mounted between two parallel strands of chain to provide a continuous substantially flat conveying surface. The conveyor chains are supported by rollers which operate over a pair of rails along the conveyor path. The supporting rollers may be of the "inboard" type wherein they are mounted on the conveyor chain bushings between the chain sidebars, as shown for example in U.S. Patent No. 3,331,490; or they may be of the "outboard" type wherein the rollers are mounted in the outside of the conveyor chain sidebars, most commonly in pairs on a shaft extending through the sidebars thereof, as shown for example in U.S. Patent No. 2,517,208.

In apron conveyors using an outboard roller construction, the rollers are commonly made of cast iron and are provided with cylindrical iron or steel bushings. Pairs of bushings and rollers are mounted on ends of the shaft and outwardly of the respective chain sidebars, as is shown in the above mentioned Patent No. 2,517,208. Preferably, some means of securing the bushings against rotation of the common shaft is used and thus the roller rotates on the bushing in the manner of a plain journal bearing. Square shaft ends and corresponding square bores in the bushings are an example of one means of preventing bushing rotation, such as shown in U.S. Patent No. 3,214,008.

Such cast iron rollers have been widely accepted as inexpensive, strong and durable components in apron conveyors used to convey a wide variety of bulk materials, such as castings, sugar cane, solid waste, limestone, coal and other minerals and ores. Most of these materials are, however, dusty, dirty, or highly abrasive and these contaminants inevitably work their way during operation of the conveyor into the bearing areas between the rollers and bushings, resulting in wear and eventual failure of the roller assembly. The rollers may be provided with internal grease cavities or reservoirs which are periodically re-greased via an external grease fitting and some of the foreign material will be purged in the re-greasing process. However, not only is such purging less than completely effective, but the basic problem of immediate re-entry of contaminants remains.

While the bearings of the roller assemblies could be provided with more efficient seals in order to substantially reduce the contaminant entry into the bearing, those seals which are available are rather complex in construction and their high cost makes them unsuitable for incorporation in roller assemblies for chain conveyors. In addition, high lateral thrust loads are imposed on the roller assemblies during operation of chain conveyors and this is a further requirement which has to be borne in mind in designing seals for such purposes.

U.S. Patent No. 3,490,773 describes a wheel construction which includes a labyrinth seal. The labyrinth is formed from two spaced and staggered rings which when filled with grease, is intended to prevent entry of contaminants into the wheel bearing. However, the arrangement described in this U.S. patent does not prevent the labyrinth being "short-circuited" by contaminants passing along the bushing surface into the bearing area.

The problem faced by the present inventors was to design a labyrinth seal for a roller assembly in which "short-circuiting" of the seal was effectively prevented. In addition, because of their usefulness in conveyors in which the bearings are liable to be subjected to substantial lateral thrust loads, a roller assembly was required which was capable of operating satisfactorily under these conditions.

According to the present invention there is provided a roller assembly which comprises a roller journalled for rotation on a bushing, the roller being sealed against ingress of foreign matter by at least one labyrinth seal, said seal comprising a pair of radially overlapping inner and outer rings received in a counterbore in one end face of the roller, characterised in that the inner ring is fitted to the bushing and the outer ring to the roller whereby passage of grease through the seal is restricted to a tortuous path formed by said overlapping inner and outer rings, the inner ring being axially spaced by a smaller clearance from the inner end of the counterbore or a part contiguous therewith than from the outer ring and having a generally L-shaped cross-section so that a radially extending surface of said inner ring provides a large bearing surface for absorbing axial thrust loads and an axially extending cylindrical surface of said inner ring is a liquid tight fit on the bushing.

By fitting one of the overlapping rings to the roller and the other ring to the bushing in such a way that no liquid may pass between a ring and the surface to which it is fitted, the danger of short-circuiting of the labyrinth seal (with consequential exposure of the bearing surfaces to ingress of contaminants) is avoided. At the same time, an effective seal is achieved by a simple, robust structure.

The rings may be fitted securely to the roller or bushing by any known process, e.g. swaging or pressing, but the currently preferred method is by means of an interference fit.

At least the inner ring of the overlapping rings which form the seal will have an L-shaped cross-section. The inner of the overlapping rings is mounted on the bushing and is spaced by a smaller distance from the roller than from the other ring so that the inner ring provides a bearing surface which is capable of absorbing axial thrust loads. It is particularly convenient to employ an inner ring having an L-shaped cross-section which is force fitted on the bushing so that the cylindrical portion extends outwardly and constitutes a liquid tight seal. Preferably the outer ring of the seal also has an L-shaped cross-section since this configuration facilitates efficient liquid-tight fitting on the bearing surfaces and provides a structure which is readily capable of withstanding high, lateral thrust loads.

As indicated above, the roller assemblies in accordance with this invention are primarily intended for use in chain conveyors. According to a further aspect of this invention, therefore, there is provided a chain conveyor comprising material conveying flights supported by at least one chain strand, the chain strand being supported for rolling movement by means of a series of spaced roller assemblies, each roller assembly comprising a bushing non-rotatably mounted on a shaft associated with said chain strand and a roller journalled for rotation on said bushing, the roller being sealed against ingress of foreign matter by at least one labyrinth seal, said seal comprising a pair of radially overlapping inner and outer rings received in a counterbore in one end face of the roller, the inner ring being fitted to the bushing and the outer ring to the roller whereby passage of grease through the seal is restricted to a tortuous path formed by said overlapping rings, the inner ring being axially spaced by a smaller clearance from the inner end of the counterbore or a part contiguous therewith than from the outer ring and having a generally L-shaped cross-section so that a radially extending surface of said inner ring provides a large bearing surface for absorbing axial thrust loads and an axially extending cylindrical surface of said inner ring is a liquid tight fit on the bushing.

The chain conveyor according to the invention may be of the inboard or outboard type and may embody a single conveyor chain strand or a plurality of chain strands. Preferably, the conveyors according to the invention are apron conveyors of the outboard type having double chain parallel strands. Chain conveyors of these general types are described in U.S. Patent Nos. 2,517,208; 3,214,008 and 3,331,490 to which reference may be made for fuller details of conveyor construction.

Several embodiments of roller assemblies in accordance with the invention will now be described by way of illustration only with reference to the accompanying drawings in which:—

Figure 1 is a perspective view of a section of an apron conveyor fitted with roller assemblies of the present invention;

Figure 2 is an enlarged perspective view of a single pan and conveyor chain link of Figure 1 showing generally the mounting arrangement of a roller assembly thereon;

Figure 3 is a cross-sectional view through the centre of a roller assembly of the presently preferred embodiment;

Figure 4 is an end elevation of the roller assembly of Figure 3;

Figure 5 is a partial cross-sectional view of an alternative embodiment of the roller assembly of the present invention; and

Figure 6 is a partial cross-sectional view of a second alternative embodiment of the roller assembly of the present invention.

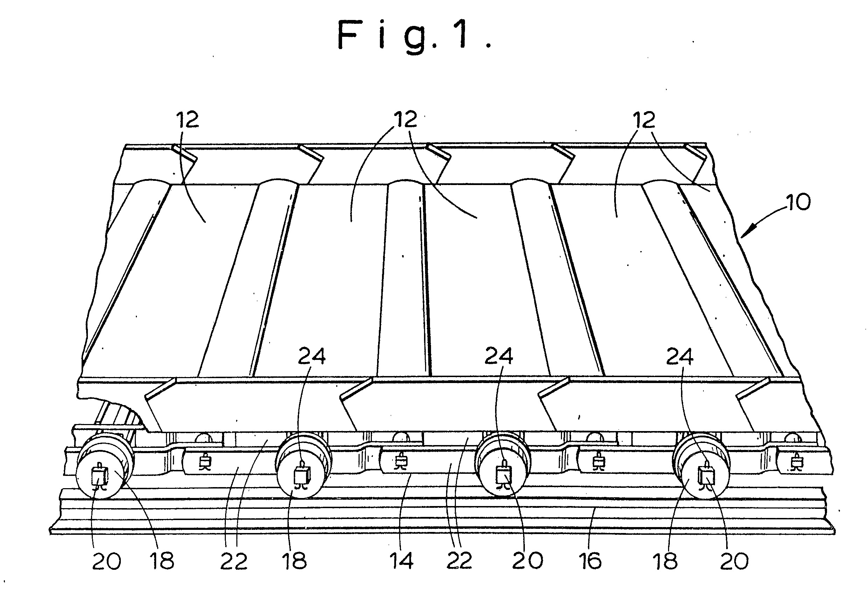

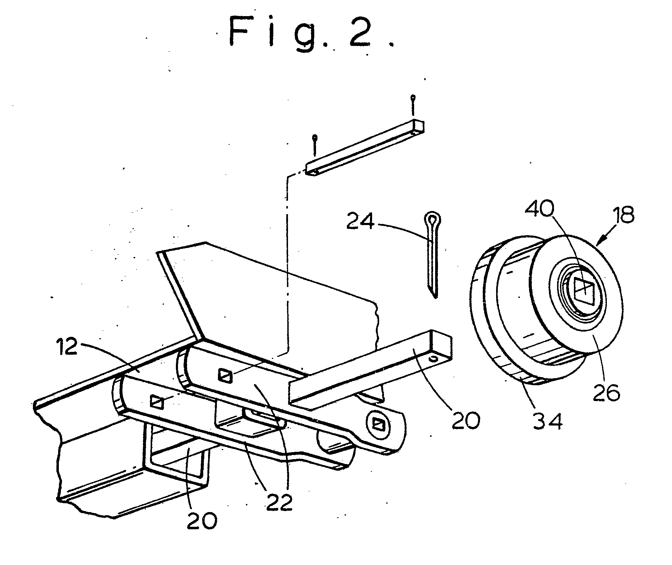

Figure 1 shows the general arrangement of an apron conveyor 10 wherein a series of open-ended, overlapping pans 12 is mounted on a pair of spaced, parallel conveyor chains 14 (only the chain on the near side being shown in Figure 1). The chains 14 are supported for travel over rails 16 by a series of roller assemblies 18 of the present invention. Referring also to Figure 2, each pair of roller assemblies 18 is conveniently mounted on the ends of a shaft 20 which extends through holes in the sidebars 22 of the chain strands 14. The roller assemblies 18 may be held on the shafts 20 in any suitable manner, such as with cotter pins 24.

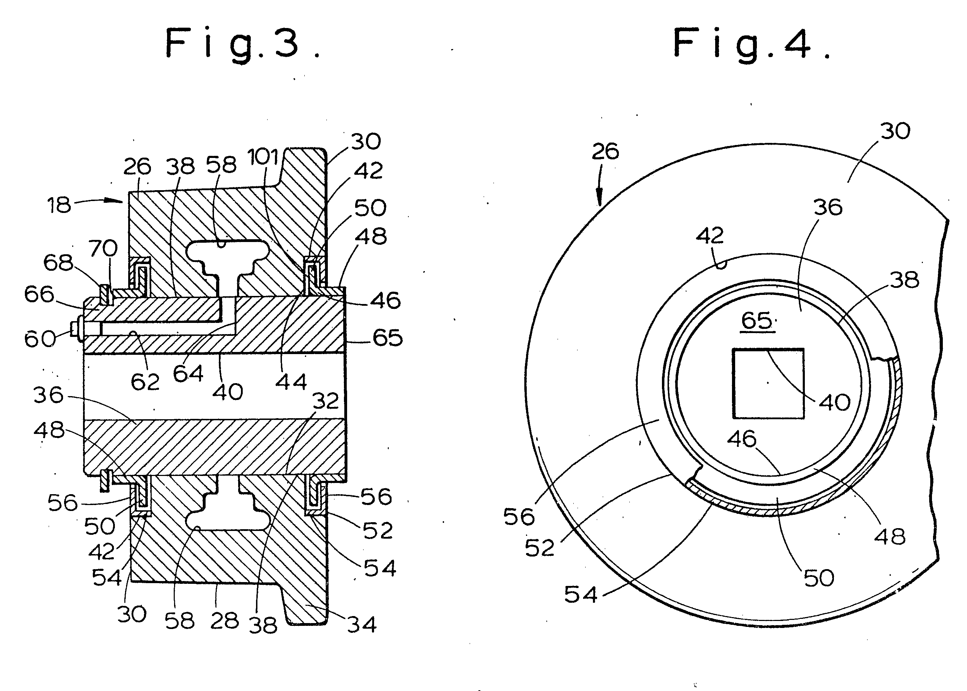

In the preferred embodiment shown in Figures 3 and 4, the roller assembly 18 includes a roller member 26 having a cylindrical outer surface 28 between generally flat parallel end faces 30, and a cylindrical bore 32 extending therethrough. The roller member 26 also preferably includes a flange 34 extending radially outward from the outer surface 28 adjacent one of the end faces 30 to keep the apron conveyor 10 on the rails 16 over which it travels.

A bushing 36 having an outer cylindrical surface 38 is journalled in the bore 32 of the roller member for relative rotation therein. In practice, of course, the roller member 26 is adapted to roll over the supporting rail 16 and the bushing 36 is preferably held from rotating by use; for example, of a square through bore 40 in the bushing. The roller member 26 and the bushing 36 are both commonly made of cast iron and the mating bearing surfaces on the bore 32 and the outer surface 38, respectively, are hardened to enhance the wear life.

Each end face 30 of the roller member is provided with a counterbore 42 having a cylindrical surface concentric with the bore 32 and an end wall 44 lying parallel to the end face 30. An inner sealing ring 46 of L-shaped cross-section having an axially extending leg 48 and a radially extending leg 50 is pressed onto the outer surface 38 of each of the bushing 36 and into the counterbores 42 in each end face 30. The inner sealing rings 46, which are preferably made of formed metal stampings, are pressed onto the bushing with a tight interference fit in the range of approximately .003 to .012 inch (0.076 to 0.3 mm). This tight interference fit secures the roller member on the bushing against axial displacement and a slight clearance is provided between the radially extending leg 50 of each inner sealing ring and the corresponding end wall 44 of the counterbore. The clearance forms the inner passage of the labyrinth seal, as will be described in greater detail below, and defines the limits of axial movement of the roller member in either direction. The axial inner face of the radially extending leg 50 also provides a substantial thrust bearing surface against which the end wall 44 of the counterbore may bear when the roller member is displaced by an axial thrust load.

An outer sealing ring 52, also of L-shaped cross-section, includes an axially extending leg 54 and a radially extending leg 56. In a manner similar to the inner sealing rings, each outer sealing ring 52 is preferably a formed metal stamping and is sized to be pressed with a tight interference fit into the counterbore 42 in each end face of the roller member. The axially extending leg 54 is preferably of a length equal to the depth of the counterbore 42, such that its inner edge abuts the end wall 44 of the counterbore and the radially extending leg 56 lies flush with the end face 30 of the roller member.

The respective radially extending legs 50 and 56 of the inner and outer sealing rings 46 and 52 are axially spaced and the clearance therebetween forms the outer passage of the labyrinth seal. These radially extending legs 50 and 56 are each respectively radially spaced from the axially extending legs 54 and 48 of the corresponding outer and inner sealing rings. Thus, proceeding outwardly from the bearing surface between the roller member and the bushing, a labyrinth seal of a generally U-shaped configuration is formed by the clearance between the counterbore end wall 44 and the radially extending leg 50 of the inner sealing ring 46, the space between the outer edge of said leg 50 and the axially extending leg 54 of the outer sealing ring 52, the clearance between the radially extending legs 50 and 56 of the inner and outer sealing rings, and the space between the edge of said leg 56 and the axially extending leg 48 of the inner sealing ring. In addition, the clearance between the radially extending legs 50 and 56 of the inner and outer sealing rings 46 and 52, respectively, is greater than the clearance between the radially extending leg 50 of the inner sealing ring and the counterbore end wall 44. In this manner, axial thrust loads are always taken by the bearing face 101 of the inner sealing ring and never transmitted to the outer sealing ring. As a result, the press fit by which the outer sealing ring is held in the counterbore 42 need not be as tight as the press fit of the inner sealing ring on the bushing 36.

To provide an effective seal, a labyrinth must be kept filled with an appropriate lubricant, such as grease, and means for periodically purging contaminated lubricant from the labyrinth should also be provided. Thus, referring to Figure 3, the roller member 26 is provided with an internal annular grease reservoir 58 having open communication with the bearing surfaces 32 and 38 of the roller member and bushing, respectively. Grease is supplied to the reservoir via an external grease fitting 60, an axial passage 62 in the bushing 36, and cross hole 64 in alignment with the reservoir opening. As grease is injected into the assembly, the reservoir 58 is filled and the excess grease is forced between the bearing surfaces 32 and 38, and into and through the labyrinth passages in both roller end faces. The labyrinths are thus kept filled with grease, which tends to work out in operation, and any contaminated grease is simultaneously purged from the passages. Alternatively, grease may be supplied to the reservoir 58 from a grease fitting and supply passage in the roller member itself (not shown).

The bushing 36 has an axial length greater than the roller member 26 and extends axially beyond both end faces 30 thereof. On the end face 30 including the flange 34, the axially outer face 65 of the extended portion of the bushing 36 is adapted to abut the outer sidebar 22 of the conveyor chain 14 to space the roller member 26 therefrom and enable it to rotate without rubbing against the chain. The extended portion of the bushing on the roller end face 30 opposite the flange 34 may optionally be provided with an annular groove 66 into which an ordinary snap ring 68 is inserted as a safety measure to retain the inner sealing ring 46 should it be forced to loosen under an axial thrust overload or similar failure.

The outer ends of the axially extending legs 48 of inner sealing rings 46 are adapted to lie flush with the outer face 65 of the bushing and the inner face 70 of the annular groove 66, respectively. The faces 65 and 70 can thus be used as locators to establish the precise positioning of the inner sealing rings 46 on the bushing 36 to provide the exact clearances desired between the radially extending legs 50 and the end walls 44 of the counterbores 42.

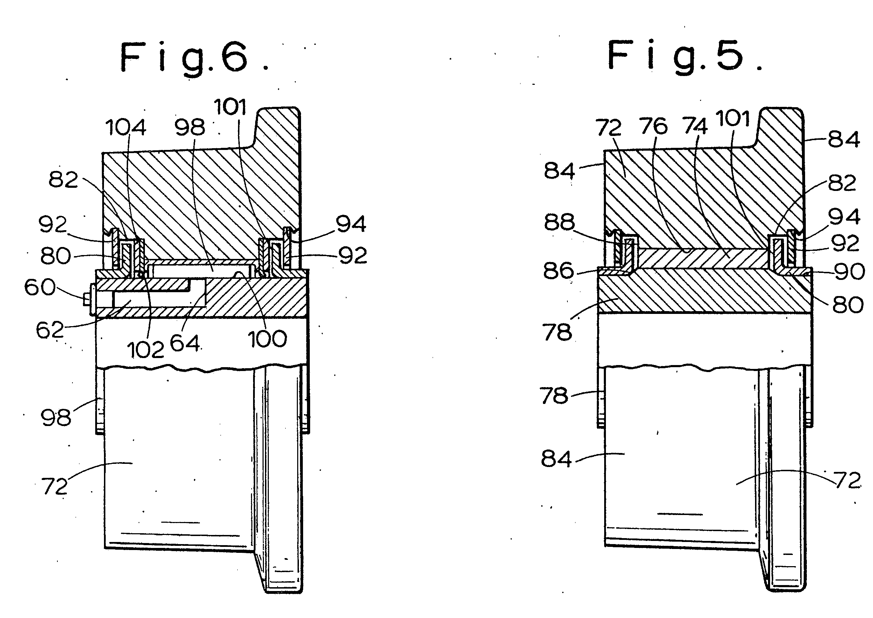

An alternative embodiment of the invention is shown in Figure 5 where the roller member 72 is constructed of a non-metallic material, such as a polyurethane. In addition, a plain cylindrical sleeve bearing 74 is mounted within the bore 76 in the roller member. The bearing may be of any of the many self-lubricating types known in the art and re-lubrication capability is therefore unnecessary. The roller member and integrally mounted bearing are adapted to rotate on the bushing 78 in a manner similar to the assembly of the preferred embodiment of Figures 3 and 4. The roller assembly of Figure 5 also includes a pair of inner sealing rings 80 pressed onto the bushing and into a counterbore 82 in each end face 84 of the roller member 72. However, the bushing 78 is provided with stop means in the form of an annular shoulder 86 positioned slightly axially outward of the end walls 88 of each counterbore 82. The shoulders 86 define bushing end portions 90 of reduced diameters, but slightly larger than the inside diameters of the axially extending legs of the inner sealing rings 80 within the limits of the desired interference fit, so that the inner sealing rings will engage the shoulders when pressed onto the bushing and accurately establish the desired spacing between the radially extending legs of said rings 80 and the respectively adjacent end walls 88 of the counterbore.

The outer sealing ring 92 may be of rectangular cross-section and include only a radially extending leg which due to the much greater elasticity of the urethane roller member, can be conveniently snapped into an annular groove 94 in the counterbore 82. The same relative clearances are maintained between the inner and outer sealing rings and between the inner rings and the end wall of the counterbore as in the preferred embodiment, so that no thrust loads are transmitted to the outer sealing ring.

In the second alternative embodiment shown in Figure 6, several of the elements are the same as in the Figure 5 embodiment and are, therefore, identically numbered. In this embodiment, however, an antifriction needle bearing is secured within the bore of the roller member 72 for rotation therewith about the bushing 98. Bushing 98 is metal and preferably has a hardened outer surface 100 to provide a durable, long-wearing inner race for the needle bearing 96. In addition, lubrication must be provided for the bearing in the same manner as for the Figure 3 preferred embodiment, to wit, via grease fitting 60, axial passage 62 and cross hole 64 in the bushing 98.

Interposed in the space between the radially extending leg of the inner sealing ring 80 and the end wall of the counterbore 82 is a supplemental sealing means in the form of an annular flexible wiping seal 102. Seal 102 is held in position by a backing ring 104 which is pressed into the counterbore 82. The free radially inner edge of the seal 102 provides full wiping contact with the surface 100 of the bushing 98 and serves to supplement the labyrinth seal both in the retention of lubricant within the bearing cavity and the exclusion of contaminants therefrom.

## Claims

1. A roller assembly which comprises a roller (26, 72) journalled for rotation on a bushing (36, 78, 98), the roller being sealed against ingress of foreign matter by at least one labyrinth seal, said seal comprising a pair of radially overlapping inner and outer rings (46, 56; 80, 92) received in a counterbore (42, 82) in one end face of the roller, characterised in that the inner ring (46, 80) is fitted to the bushing (36, 78, 98) and the outer ring (56, 92) to the roller whereby passage of grease through the seal is restricted to a tortuous path formed by said overlapping inner and outer rings (46, 56; 80, 92), the inner ring (46, 80) being axially spaced by a smaller clearance from the inner end of the counterbore or a part contiguous therewith (26, 72; 104) than from the outer ring (56, 92) and having a generally L-shaped cross-section so that a radially extending surface (101) of said inner ring provides a large bearing surface for absorbing axial thrust loads and an axially extending cylindrical surface (48) of said inner ring is a liquid tight fit on the bushing.

2. An assembly according to Claim 1 in which the overlapping inner and outer rings (46, 56; 80, 92) are force fitted by interference fits to the bushings and (36, 78, 98) roller (26, 72) respectively.

3. An assembly according to Claim 1 or Claim 2 in which the roller has a counterbore (48, 82) at each end face which is sealed with a labyrinth seal comprising a pair of overlapping inner and outer rings (46, 56; 80, 92) wherein each of the outer rings (56, 92) is of generally L-shaped cross-section.

4. An assembly according to any one of the preceding Claims in which the outer end of the axially extending portion of the inner ring (46, 80) is coplanar with the end face (65) of the bushing (36, 78, 98).

5. An assembly according to any one of the preceding Claims in which a labyrinth seal comprising a pair of overlapping rings (46, 56; 80, 92) is provided at each end of the roller (26, 72).

6. A roller assembly according to any one of the preceding Claims in which the inner ring (80) is fitted on a reduced diameter end portion (90) of the bushing leading to an annular shoulder (86), said shoulder forming an abutment for establishing correct clearance between the overlapping rings (80, 92).

7. An assembly according to any one of the preceding Claims in which a reservoir (58) for grease is provided within the roller (26) and communicates with the bushing (36).

8. An assembly according to any one of Claims 1 to 7 in which a bearing sleeve (74) of antifriction material is interposed between the roller (72) and the bushing (78).

9. A chain conveyor comprising material conveying flights (12) supported by at least one chain strand (14), the chain strand being supported for rolling movement by means of a series of spaced roller assemblies (18), each roller assembly comprising a bushing (36, 78, 98) non-rotatably mounted on a shaft (20) associated with said chain strand and a roller (26, 72) journalled for rotation on said bushing, the roller being sealed against ingress of foreign matter by at least one labyrinth seal, said seal comprising a pair of radially overlapping inner and outer rings (46, 56; 80, 92) received in a counterbore (42, 82) in one end face of the roller, characterised in that the inner ring (46, 80) is fitted to the bushing (36, 78, 98) and the outer ring (56, 92) to the roller whereby passage of grease through the seal is restricted to a tortuous path formed by said overlapping rings, the inner ring (46, 80) being axially spaced by a smaller clearance from the inner end of the counterbore or a part contiguous therewith (26, 72; 104) than from the outer ring (56, 92) and having a generally L-shaped cross-section so that a radially extending surface (101) of said inner ring provides a large bearing surface for absorbing axial thrust loads and an axially extending cylindrical surface (48) of said inner ring is a liquid tight fit on the bushing.

**Revendications**

1. Dispositif à galet comprenant un galet (26, 72) monté de façon rotative dans un coussinet (36, 78, 98), le galet étant fermé de façon étanche pour éviter la pénétration de matières étrangères au moins par un joint à labyrinthe, ledit joint comprenant une paire de bagues interne et externe (46, 56; 80, 92) se chevauchant radialement et reçues dans un contre-alésage (42, 82) dans une face terminale du galet, caractérisé en ce que la bague interne (46, 80) est fixée au coissinet (36, 78, 98) et la bague externe (56, 92) au galet, grâce à quoi le passage de la graisse par le joint est limité à un parcours tortueux formé par lesdites bagues interne et externe en chevauchement (46, 56; 80, 92), la bague interne (46, 80) étant espacée axialement de l'extrémité interne du contre-alésage ou d'une partie contiguë à celui-ci (26, 72; 104) par un jeu plus faible que celui la séparant de la bague externe (56, 92) et étant de section transversale de forme générale en L de manière qu'une surface (101) s'étendant radialement de ladite bague interne détermine une surface d'appui importante pour absorber les charges de poussée axiales, et qu'une surface cylindrique (48) de ladite bague interne s'étendant axialement soit fixée au coussinet de façon étanche aux liquides.

2. Dispositif selon la revendication 1, caractérisé en ce que les bagues interne et externe (46, 56; 80, 92) qui se chevauchent sont montées à force avec ajustements à serrage sur le coussinet (36, 78, 98) et sur le galet (26, 72) respectivement.

3. Dispositif selon la revendication 1 ou 2, le galet comprenant un contre-alésage (48, 82) sur chaque face terminale, qui est rendu étanche au moyen d'un joint à labyrinthe comportant une paire de bagues interne et externe (46, 56; 80, 92) se chevauchant, caractérisé en ce que chacune des bagues externes (56, 92) a une section transversale de forme générale en L.

4. Dispositif selon l'une quelconque des revendications précédentes, caractérisé en ce que l'extrémité externe de la partie de la bague interne (46, 80) qui s'étend axialement est coplanaire avec la face terminale (65) du coussinet (36, 78, 98).

5. Dispositif selon l'une quelconque des revendications précédentes, caractérisé en ce qu'un joint à labyrinthe comprenant une paire de bagues en chevauchement (46, 56; 80, 92) est prévu à chaque extrémité du galet (26, 72).

6. Dispositif à galet selon l'une quelconque des revendications précédentes, caractérisé en ce que la bague interne (80) est fixée sur une extrémité de diamètre réduit (90) du coussinet se prolongeant en un épaulement annulaire (86), ledit épaulement formant une butée pour établir un jeu correct entre les bagues en chevauchement (80, 92).

7. Dispositif selon l'une quelconque des revendications précédentes, caractérisé en ce qu'un réservoir (58) à graisse est prévu à l'intérieur du galet (26) et communique avec le coussinet (36).

8. Dispositif selon l'une quelconque des revendications 1 à 7, caractérisé en ce qu'un manchon à coussinet (74) réalisé en un matériau anti-friction est interposé entre le galet (72) et le coussinet (78).

9. Convoyeur à chaîne comprenant des volées transporteuses (12) supportées par au moins une chaîne porteuse (14), la chaîne porteuse étant supportée de manière à effectuer un mouvement de roulement au moyen d'une série de dispositifs à galet espacés (18), chaque dispositif à galet comprenant un coussinet (36, 78, 98) monté de façon non rotative sur un arbre (20) associé à ladite chaîne porteuse et un galet (26, 72) étant monté de façon rotative dans ledit coussinet, le galet étant fermé de façon étanche pour éviter la pénétration de matières étrangères au moyen d'au moins un joint à labyrinthe, ledit joint comprenant une paire de bagues interne et externe (46, 56; 80, 92) se chevauchant radialement, reçues dans un contre-alésage (42, 82) d'une face terminale du galet, caractérisé en ce que la bague interne (46, 80) est fixée au coussinet (36, 78, 98) et la bague externe (56, 92) au galet, grâce à quoi le passage de la graisse par le joint est restreint à un parcours tortueux formé par lesdites bagues en chevauchement, la bague interne (46, 80) étant espacée axialement de l'extrémité interne du contre-alésage ou d'une partie contiguë à celui-ci (26, 72; 104) par un jeu plus faible que celui la sépa.ant de la bague externe (56, 92), et ayant une section transversale de forme générale en L de manière qu'une surface (101) de ladite bague interne s'étendant radialement détermine une surface d'appui importante pour absorber les charges de poussée axiales, et qu'une surface cylindrique (48) de ladite bague interne s'étendant axialement soit fixée au coussinet de façon étanche aux liquides.

## Patentansprüche

1. Rollenanordnung mit einer drehbar auf einer Buchse (36, 78, 98) gelagerten Rolle (26, 72), die durch mindestens eine Labyrinthdichtung gegen das Eindringen von Fremdstoffen abgedichtet ist, wobei die Dichtung einen Innenring (46, 80) und einen Außenring (56, 92) aufweist, die einander radial überlappend in einer Zylindersenkung (42, 82) in einer Endfläche der Rolle aufgenommen sind, dadurch gekennzeichnet, daß der Innenring (46, 80) auf die Buchse (36, 78, 98) und der Außenring (56, 92) auf die Rolle aufgesetzt ist, so daß der Durchtritt von Schmiermittel durch die Dichtung auf eine durch den Innen- und den Außenring (46, 45; 80, 92), die einander überlappen, gebildete verschlungene Bahn begrenzt ist, wobei der Innenring (46, 80) vom Innenende der Zylindersenkung oder einem daran angrenzenden Teil (26, 72; 104) einen geringeren axialen Abstand als vom Außenring (56, 92) aufweist und im wesentlichen L-Querschnitt hat, so daß eine radial verlaufende Fläche (101) des Innenrings eine große Lagerfläche zur Aufnahme von Schubbelastungen bildet und eine axial verlaufende Zylinderfläche (48) des Innenrings in flüssigkeitsdichter Passung auf der Buchse sitzt.

2. Anordnung nach Anspruch 1, dadurch gekennzeichnet, daß der Innen- und der Außenring (46, 56; 80, 92), die einander überlappen, durch Preßpassung im Festsitz auf die Buchse (36, 78, 98) bzw. die Rolle (26, 72) aufgebracht sind.

3. Anordnung nach Anspruch 1 oder 2, dadurch gekennzeichnet, daß die Rolle an jeder Endfläche eine Zylindersenkung (48, 82) aufweist, die mit einer Labyrinthdichtung abgedichtet ist, die aus einem Innen- und einem Außenring (46, 45; 80, 92), die einander überlappen, besteht, wobei jeder Außenring (56, 92) im wesentlichen L-Querschnitt hat.

4. Anordnung nach einem der vorhergehenden Ansprüche, dadurch gekennzeichnet, daß äußere Ende des axial verlaufenden Abschnitts des Innenrings (46, 80) in derselben Ebene wie die Endfläche (65) der Buchse (36, 78, 98) liegt.

5. Anordnung nach einem der vorhergehenden Ansprüche, dadurch gekennzeichnet, daß an jedem Ende der Rolle (26, 72) eine Labyrinthdichtung aus einem Paar von einander überlappenden Ringen (45, 56; 80, 92) vorgesehen ist.

6. Rollenanordnung nach einem der vorhergehenden Ansprüche, dadurch gekennzeichnet, daß der Innenring (80) auf einen verringerten Durchmesser aufweisenden Endabschnitt (90) der Buchse, der zu einer ringförmigen Schulter (86) führt, gepaßt ist, wobei die Schulter einen Anschlag zum Herstellen des richtigen Abstands zwischen den einander überlappenden Ringen (80, 92) bildet.

7. Anordnung nach einem der vorhergehenden Ansprüche, dadurch gekennzeichnet, daß ein Schmiermittelreservoir (58) in der Rolle (26) vorgesehen ist und mit der Buchse (36) in Verbindung steht.

8. Anordnung nach einem der Ansprüche 1—7, dadurch gekennzeichnet, daß zwischen der Rolle (72) und der Buchse (78) eine Lagerhülse (74) aus Lagerwerkstoff angeordnet ist.

9. Kettenförderer mit Gutförder-Plattenbändern (12), die von wenigstens einem Kettenstrang (14) abgestützt sind, wobei der Kettenstrang von einer Serie beabstandeter Rollenanordnungen (18) rollbeweglich abgestützt ist und jede Rollenanordnung (18) aufweist eine Buchse (36, 78, 98), die drehfest auf einer dem Kettenstrang zugeordneten Welle (20) befestigt ist, und eine Rolle (26, 72), die drehbar auf der Buchse gelagert ist, und wobei die Rolle gegen das Eindringen von Fremdstoffen durch wenigstens eine Labyrinthdichtung abgedichtet ist, die aus einem Innen- und einem Außenring (46, 56; 80, 92), die einander radial überlappend in einer Zylindersenkung (42, 82) in einer Endfläche der Rolle aufgenommen sind, besteht, dadurch gekennzeichnet, daß der Innenring (46, 80) auf die Buchse (36, 78, 98) und der Außenring (56, 92) auf die Buchse (36, 78, 98) und der Außenring (56, 92) auf die Rolle gepaßt ist, so daß der Durchtritt von Schmiermittel durch die Dichtung auf eine durch die einander überlappenden Ringe gebildete verschlungene Bahn begrenzt ist, wobei der Innenring (46, 80) vom Innenende der Zylindersenkung oder einem daran angrenzenden Teil (26, 72; 104) einen geringeren axialen Abstand als vom Außenring (56, 92) aufweist und im wesentlichen L-Querschnitt hat, so daß eine radial verlaufende Fläche (101) des Innenrings eine große Lagerfläche zur Aufnahme von Schubbelastungen bildet und eine axial verlaufende Zylinderfläche (48) des Innenrings in flüssigkeitsdichter Passung auf der Buchse sitzt.

Fig.1.

0 000 105

# Fig. 2.

# Fig.3.

# Fig.4.

Fig.6.

Fig.5.